# EUROPÄISCHE PATENTSCHRIFT

(11) **EP 0 733 822 B1**
(45) Veröffentlichungstag und Bekanntmachung des Hinweises auf die Patenterteilung: **17.05.2000**
(21) Anmeldenummer: 96101939.5
(22) Anmeldetag: 10.02.1996
(51) Int. Cl.: F16F 9/32

(54) **Mit Fluid gefüllte Zylinder-Kolbenstangen-Einheit, insbesondere Gasfeder**
Cylinder-piston unit filled with a fluid,especially a gasspring
Unité de piston/cilindre rempli à fluide,un verin à gaz en particulier

(30) Priorität: 24.02.1995 DE 19506479
(43) Veröffentlichungstag der Anmeldung: 25.09.1996
(73) Patentinhaber: SUSPA COMPART Aktiengesellschaft, 90518 Altdorf (DE)
(72) Erfinder: Bauer, Hans-Peter, D-90518 Altdorf (DE)
(74) Vertreter: Rau, Manfred, Dr. Dipl.-Ing.

(56) Entgegenhaltungen:
- EP-A- 0 565 015
- DE-A- 3 700 934
- DE-C- 939 784
- FR-A- 2 596 481
- US-A- 2 957 734
- US-A- 4 079 925

## Beschreibung

Die Erfindung betrifft eine mit Fluid gefüllte Zylinder-Kolbenstangen-Einheit, insbesondere eine Gasfeder, nach dem Oberbegriff des Anspruchs 1.

Bei derartigen in der Praxis allgemein bekannten Einheiten handelt es sich in der Regel um Gasfedern, die zumindest teilweise mit Druckgas und gegebenenfalls zu einem Teil mit Öl gefüllt sind. Darüber hinaus handelt es sich sehr oft um Stoßdämpfer, die im wesentlichen mit Öl gefüllt sind und einen gasgefüllten Ausgleichsraum aufweisen. Wenn in der Folge von Gasfedern gesprochen wird, dann umfaßt dies immer auch die durch die allgemeine Definition abgedeckten Einheiten, insbesondere also Gasfedern, die im wesentlichen nur mit Druckgas gefüllt sind, Gasfedern, die außer mit Druckgas auch zu einem nicht unwesentlichen Teil mit Öl gefüllt sind und Stoßdämpfer, die zu einem wesentlichen Teil mit Öl und nur zu einem geringeren Teil mit Gas gefüllt sind. Eine aus der US-A-4,079,925 bekannte Gasfeder der gattungsgemäßen Art weist ein im wesentlichen zylindrisches Gehäuse auf, in dem koaxial eine Kolbenstange verschiebbar angeordnet ist. Diese weist an ihrem im Gehäuse befindlichen Ende einen Kolben auf, der als Dämpfungskolben ausgebildet ist. Am kolbenstangenaustrittsseitigen Ende des Gehäuses ist eine Führung angebracht, die auch eine Dichtungseinheit aufnimmt. Letztere umfaßt eine dichtend an der Innenwand des Gehäuses anliegende Außen-Dichtung und eine an der Kolbenstange anliegende Innen-Dichtung. Da die Kolbenstange gegenüber der Innen-Dichtung bewegt wird, ist die Innen-Dichtung in der Regel als sogenannte Lippendichtung ausgebildet, d.h. die Lippen liegen dichtend an der Kolbenstange an. Das Füllen dieser Gasfedern mit Druckgas erfolgt üblicherweise derart, daß das Druckgas durch den sehr engen Ringspalt zwischen der Führung und der Kolbenstange und zwischen den Lippen der Innen-Dichtung und der Kolbenstange hindurch in das Innere des Gehäuses gedrückt wird. Dies ist möglich, weil die Lippen eine Dichtcharakteristik haben, wonach sie primär unter dem im Gehäuse herrschenden Gasdruck gegen die Kolbenstange gedrückt werden. In der Praxis hat sich gezeigt, daß beim Füllen der Gasfeder wegen des notwendigen Überdruckes zum Öffnen der Dichtung ein Einhalten einer engen Toleranz für die Ausschubkraft problematisch ist. Derartige Einheiten weisen einerseits am außerhalb des Gehäuses befindlichen Ende der Kolbenstange und andererseits am verschlossenen Ende des Gehäuses Befestigungselemente auf, bei denen es sich um die entsprechenden Anschlußelemente von Kugelgelenken handeln kann. Das Gehäuse ist hierbei an seinem verschlossenen Ende nach innen umgebördelt und mit einem angeschweißten Gewindestutzen versehen, auf den als Befestigungselement eine Kugelpfanne eines Kugelgelenks aufgeschraubt wird. Dies ist außerordentlich aufwendig. Es kann auch ein sogenanntes Auge vorgesehen sein.

Aus der EP 0 565 015 A2 ist eine Gasfeder bekannt, die ebenfalls weitgehend der gattungsgemäßen entspricht, wobei lediglich am Verschlußstopfen kein Befestigungselement vorgesehen ist. Das Füllen mit Druckgas erfolgt in der geschilderten Weise.

Aus der DE 37 00 934 A1 ist eine Gasfeder bzw. ein hydraulischer Stoßdämpfer bekannt, bei der bzw. dem die die Kolbenstange aufnehmende Führung und ein ringförmiger Verschlußstopfen jeweils an ihrem Außenumfang eine Ringnut mit einer Dichtung tragen, wobei das Gehäuse gegenüber der Führung und dem Verschlußstopfen dadurch fixiert ist, daß eine Gehäuse-Sicke in die jeweilige Dichtung eingerollt ist.

Aus der US-A-2,957,734 ist ein hydraulisch beaufschlagbarer Kolben-Zylinder-Antrieb bekannt, der im Bereich der Führung der Kolbenstange und des Verschlußstopfens jeweils mit einem Anschluß für ein Druckmedium versehen ist. Füllprobleme treten hierbei nicht auf.

Der Erfindung liegt die Aufgabe zugrunde, das dem Austritt der Kolbenstange abgewandte Ende des Gehäuses der gattungsgemäßen Einheit in einfacher Weise so zu verschließen, daß die mit dem Füllen des Gehäuses über das kolbenstangenseitige Ende verbundenen Probleme vermieden werden können. Diese Aufgabe wird erfindungsgemäß durch die Merkmale im Kennzeichnungsteil des Anspruchs 1 gelöst.

Der in der Regel aus Kunststoff gebildete Verschlußstopfen muß lediglich in das Ende des Gehäuses eingeführt und dort festgelegt werden. Diese Ausgestaltung ermöglicht es, das Füllen des Gehäuses mit Druckgas von dem dem Verschlußstopfen zugeordneten Ende her vorzunehmen, wodurch die beim Füllen über die Dichtung am kolbenstangenaustrittsseitigen Ende auftretenden Probleme vermieden werden. Der zum Füllen am zu verschließenden Ende des Gehäuses auszubildende Überbrückungs-Kanal kann beim Verschließen wieder beseitigt werden. Die Anordnung der Ringdichtung am stirnseitigen Ende des Verschlußstopfens ermöglicht es, die Dichtung zwischen Verschlußstopfen und der am Gehäuse ausgebildeten Anlagefläche erst beim vollständigen Einschieben des Verschlußstopfens herzustellen.

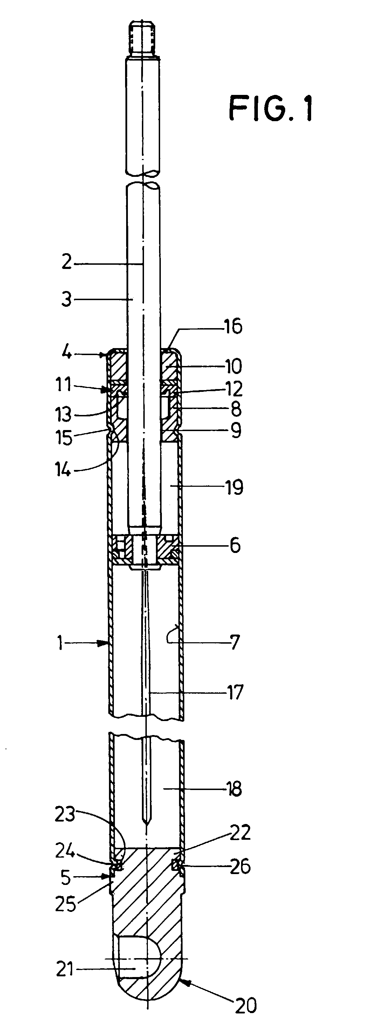

Weitere Merkmale, Vorteile und Einzelheiten der Erfindung ergeben sich aus der Beschreibung von Ausführungsbeispielen anhand der Zeichnung. Es zeigt
- Fig. 1: eine Gasfeder im Längsschnitt,
- Fig. 2: eine Ausgestaltung eines Verschlußstopfens in einer Position zum Füllen der Gasfeder mit Druckgas,
- Fig. 3: die Ausgestaltung nach Fig. 2 bei mit dem Gehäuse verbundenen Verschlußstopfen und
- Fig. 4: eine Ausgestaltung eines Verschlußstopfens mit einer Befestigungsöse.

Die in der Zeichnung dargestellte Gasfeder weist ein im wesentlichen aus einem zylindrischen Rohr bestehendes Gehäuse 1 mit einer Mittel-Längs-Achse 2 und einer koaxial zur Achse 2 angeordneten im Gehäuse 1 verschiebbaren Kolbenstange 3 auf. Die Kolbenstange 3 ist an einem Ende 4 des Gehäuses 1 aus diesem herausgeführt. Am anderen Ende 5 ist das Gehäuse 1 gasdicht verschlossen.

An ihrem im Gehäuse 1 befindlichen Ende ist die Kolbenstange 3 mit einem Kolben 6 versehen, der an der Innenwand 7 des Gehäuses 1 geführt ist. Der Kolben 6 ist in üblicher Weise als sogenannter Dämpfungskolben ausgebildet, und zwar mit unterschiedlicher Dämpfungscharakteristik für das Einschieben der Kolbenstange 3 in das Gehäuse 1 bzw. für das Ausfahren der Kolbenstange 3 aus dem Gehäuse 1.

Die Kolbenstange 3 ist am Ende 4 des Gehäuses 1 in einer Führung abgedichtet geführt. Die Führung selber besteht aus zwei Teilen, nämlich einer Anschlag- und Distanz-Hülse 8 mit einem Führungsabschnitt 9 für die Kolbenstange 3 und aus einem Führungs-Ring 10. Die Hülse 8 ist dem Kolben 6 zugewandt, wobei auch der Führungsabschnitt 9 dem Kolben 6 zugewandt ist. Der Führungs-Ring 10 ist dem Ende 4 des Gehäuses 1 zugewandt. Zwischen der Hülse 8 und dem Ring 10 ist eine Dichtung 11 angeordnet, die mit einem Außen-Dichtungsring 12 gegen die Innenwand 7 des Gehäuses 7 dichtend anliegt. Sie weist weiterhin einen einstückig mit dem Außen-Dichtungsring 12 ausgebildeten Innen-Dichtungsring 13 auf, der dichtend gegen die Kolbenstange 3 anliegt. Dieser Innen-Dichtungsring 13 kann mit an der Kolbenstange 3 anliegenden Dichtungslippen ausgebildet sein, die verhältnismäßig empfindlich sind.

Die Hülse 8 weist eine Außen-Umfangsnut 14 auf, in die eine im Gehäuse 1 ausgebildete, zur Achse 2 hin vorspringende umlaufende Sicke 15 eingreift, wodurch die Anschlag- und Distanzhülse 8 mit dem Gehäuse 1 fest verbunden wird und wodurch ihre Lage in Richtung der Achse 2 relativ zum Gehäuse 1 definiert wird. Das Gehäuse 1 ist am Ende 4 mit einer den Führungs-Ring 10 umgreifenden Umbördelung 16 versehen, wodurch wiederum der Führungs-Ring 10 im Gehäuse 1 festgelegt wird. Durch das Einrollen der Sicke 15 einerseits und das Anbringen der Umbördelung 16 andererseits wird auch der Abstand des Führungs-Rings 10 von der Hülse 8 und damit die Vorspannung der Dichtung 11 in Richtung der Achse 2 zwischen dem Ring 10 und der Hülse 8 vorgegeben. Durch diese Vorspannung in Richtung der Achse 2 erfolgt eine Verspannung in radialer Richtung, d.h. durch diese Vorspannung in Richtung der Achse 2 wird auch die Anpreßkraft vorgegeben, mit der der Außen-Dichtungsring 11 gegen die Innenwand 7 und der Innen-Dichtungsring 13 gegen die Kolbenstange anliegt.

In der Innenwand 7 des Gehäuses 1 ist ein durch eine Längssicke gebildeter Überström-Kanal 17 ausgebildet, durch den Druckgas am Kolben 6 vorbei aus dem zwischen dem Kolben 6 und dem verschlossenen Ende 5 begrenzten Gehäuseraum 18 in den zwischen dem Kolben 6 und der Führung begrenzten Gehäuseraum 19 und umgekehrt strömen kann. Das Gehäuse 1 ist teilweise oder vollständig mit Druckgas gefüllt.

Das Gehäuse 1 ist am Ende 5 mit einem Verschlußstopfen 20 verschlossen, der als Befestigungselement die Kugelpfanne 21 eines Kugelgelenks aufweist. Die Merkmale, die zur Halterung einer Kugel in der Kugelpfanne 21 dienen, sind nicht dargestellt, sie können in beliebiger, durch den Stand der Technik bekannter Weise ausgestaltet sein. Der Verschlußstopfen 20 weist einen zylindrischen Abschnitt 22 auf, der zur Anlage an der Innenwand 7 kommt. Dieser zylindrische Abschnitt ist mit einer Ringnut 23 versehen, in der eine Ringdichtung 24 angeordnet ist, die gegen die Innenwand 7 zur Anlage kommt. Das Ende 5 des Gehäuses 1 kommt zur Anlage gegen einen Ringbund 25 des Verschlußstopfens 20, wodurch die Lage des Verschlußstopfens 20 relativ zum Gehäuse 1 axial definiert und festgelegt wird. Die Befestigung des Verschlußstopfens 20 am Gehäuse 1 erfolgt durch eine Sicke 26, die im Bereich der Ringnut 23 bzw. der Ringdichtung 24 von außen in das Gehäuse 1 gerollt wird. Diese Sicke 26 wird in die Ringnut 23 hineingedrückt, wobei die axiale Festlegung des Verschlußstopfens 20 am Gehäuse 1 erfolgt. Gleichzeitig wird hierdurch die Ringdichtung 24 verspannt, so daß sie rundum dicht in der Ringnut 23 und im Bereich der Sikke 26 an der Innenwand 7 dichtend anliegt. Bei dieser Ausgestaltung kann das Füllen des Gehäuses mit Druckgas in bekannter Weise im Bereich des Endes 4 des Gehäuses 1 erfolgen.

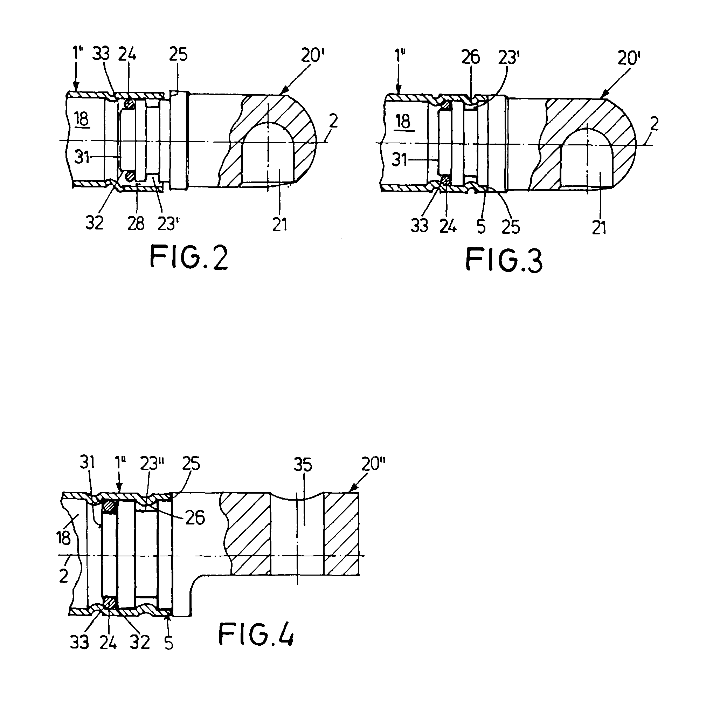

Bei den Ausgestaltungen nach den Fig. 2 bis 4 erfolgt dagegen das Füllen des Gehäuses 1' und 1" im Bereich des Verschlußstopfens 20' und 20".

Die Ausführungsform nach den Fig. 2 und 3 weist einen Verschlußstopfen 20' mit einer Kugelpfanne 21 auf, dessen zylindrischer Abschnitt 22' eine Ringnut 23' aufweist, die in der Nähe des Ringbundes 25 angeordnet ist. Am stirnseitigen Ende 31 des Verschlußstopfens 20' ist eine zum Gehäuseraum 18 hin offene ringförmige Ausnehmung 32 zur Aufnahme einer Ringdichtung 24 vorgesehen, die also vom stirnseitigen Ende 31 her in diese Ausnehmung 32 eingesetzt werden kann. Diese Ausgestaltung weist den Vorteil auf, daß die ringförmige Ausnehmung 32 zuverlässig ohne Grat beim Spritzgießen des Verschlußstopfens 20' hergestellt werden kann, so daß die Gefahr einer Beschädigung der Ringdichtung 24 zuverlässig ausgeschlossen ist. Als Anlagefläche 33 für die Ringdichtung ist im Gehäuse 1' eine rundum laufende, nach innen zur Achse 2 vorspringende Sicke vorgesehen, gegen die die Ringdichtung 24 angedrückt wird, wenn das Gehäuse 1' mit seinem Ende 5 gegen den Ringbund 25 angedrückt wird. Zum Füllen des Gehäuses 1' mit Druckgas ist ein als Längssicke ausgebildeter Überbrückungs-Kanal 28 vorgesehen. Das Füllen des Gehäuses 1' erfolgt in der in Fig. 2 dargestellten Position, in der die Ringdichtung 24 nicht gegen die Anlagefläche 33 anliegt und von dem Überbrückungs-Kanal 28 überbrückt wird. Nach dem Füllen des Gehäuses 1' wird dieses mit seinem Ende 5 gegen den Ringbund 25 gedrückt, wodurch gleichzeitig die Ringdichtung 24 dichtend gegen die Anlagefläche 33 zur Anlage kommt. Anschließend wird eine Sicke 26 in das Gehäuse 1' an der Stelle eingerollt, in der es sich über der Ringnut 23' befindet. Gleichzeitig wird auch der Überbrükkungs-Kanal 28 durch entsprechende Verformung des Gehäuses 1' entfernt, wie in Fig. 3 erkennbar ist.

Die Ausführungsform nach Fig. 4 unterscheidet sich von den zuvor geschilderten Ausführungsformen primär dadurch, daß der Verschlußstopfen 20" nicht mit einer Kugelpfanne versehen ist, sondern daß das Befestigungselement durch eine Öse 35, ein sogenanntes Auge, gebildet wird. Durch dieses können Befestigungsbolzen oder Zapfen zur Anlenkung hindurch gesteckt werden, was im übrigen allgemein üblich und bekannt ist. Der die Öse 35 enthaltende Bereich des Verschußstopfens 20" ist deutlich gegenüber der Mittel-Längs-Achse abgekröpft. Im übrigen entspricht der im Gehäuse 1" der Gasfeder unterzubringende Bereich des Verschlußstopfens 20" der Ausgestaltung nach den Fig. 2 und 3.

## Patentansprüche

1. Mit Fluid gefüllte Zylinder-Kolbenstangen-Einheit, insbesondere Gasfeder, mit folgenden Merkmalen:
- ein eine Mittel-Längs-Achse (2) aufweisendes, im wesentlichen zylindrisches Gehäuse (1', 1"), das ein verschlossenes erstes Ende (5) und ein zweites Ende (4) und eine Innenwand (7) aufweist,
- eine teilweise im Gehäuse (1', 1") und teilweise außerhalb des Gehäuses (1', 1") koaxial zur Mittel-Längs-Achse (2) angeordnete Kolbenstange (3),
- ein an der Kolbenstange (3) angebrachter, der Innenwand (7) zugeordneter Kolben (6),
- eine am zweiten Ende (4) des Gehäuses (1', 1") angeordnete Führung zur Führung der Kolbenstange (3) in Richtung der Mittel-Längs-Achse (2),
- eine im Bereich der Führung angeordnete, gegen die Innenwand (7) dichtend anliegende Außen-Dichtung (12),
- eine im Bereich der Führung angeordnete, gegen die Kolbenstange (3) dichtend anliegende Innen-Dichtung (13) und
- ein im Bereich des ersten Endes (5) angeordneter, formschlüssig mit dem Gehäuse (1', 1") verbundener, mit einer gegen die Innenwand (7) anliegenden Ringdichtung (24) versehener und mit einem Befestigungselement (21, 35) ausgebildeter Verschlußstopfen (20', 20")
**dadurch gekennzeichnet**,
**daß** der Verschlußstopfen (20', 20") mit einem Anschlag (25) zur Anlage am ersten Ende (5) des Gehäuses (1) versehen ist,
**daß** der Verschlußstopfen (20', 20") an seinem im Gehäuse (1', 1") befindlichen stirnseitigen Ende (31) eine ringförmige Ausnehmung (32) zur Aufnahme der Ringdichtung (24) aufweist, und wobei die Ringdichtung (24) gegen eine radial zur Mittel-Längs-Achse (2) aus der Innenwand (7) des Gehäuses (1', 1") vorspringende Anlagefläche (33) anliegt und
**daß** der Verschlußstopfen (20', 20") gegenüber dem Gehäuse (1', 1") durch ein in eine an seinem Umfang ausgebildete Ringnut (23', 23") eingreifende Sicke (26) festgelegt ist.

2. Zylinder-Kolbenstangen-Einheit nach Anspruch 1, **dadurch gekennzeichnet, daß** der das Befestigungselement (21, 35) enthaltende Bereich des Verschlußstopfens (20") gegenüber der Mittel-Längs-Achse (2) abgekröpft ist.

## Claims

1. A fluid-filled unit of a cylinder and a piston rod, in particular a gas spring, comprising the following features:
- a substantially cylindrical housing (1', 1"), which has a central longitudinal axis (2) and a closed first end (5) and a second end (4) and an inside wall (7);
- a piston rod (3) disposed coaxially of the central longitudinal axis (2) partially within the housing (1', 1") and partially outside the housing (1', 1");
- a piston (6) attached to the piston rod (3) and associated with the inside wall (7);
- a guide disposed at the second end (4) of the housing (1', 1") for the guidance of the piston rod (3) in the direction of the central longitudinal axis (2);
- an exterior seal (12) disposed in the vicinity of the guide and bearing sealingly against the inside wall (7);
- an interior seal (13) disposed in the vicinity of the guide and bearing sealingly against the piston rod (3); and
- a plug (20', 20"), which is disposed in the vicinity of the first end (5), which is joined to the housing (1, 1") by positive fit, which is provided with an annular seal (24) bearing against the inside wall (7), and which is provided with a fastening element (21, 35),
**characterized**
**in that** the plug (20', 20") is provided with a stop (25) to bear against the first end (5) of the housing (1);
**in that** on its frontal end (31) located in the housing (1', 1"), the plug (20', 20") has an annular recess (32) for the accommodation an annular seal (24), and wherein the annular seal (24) bears against a bearing surface (33) projecting from the inside wall (7) of the housing (1', 1") radially to the central longitudinal axis (2); and
**in that** the plug (20', 20") is arrested in relation to the housing (1', 1") by a crimp (26) which engages with an annular groove (23, 23') formed on the circumference of the plug (20', 20").

2. A unit of a cylinder and a piston rod according to claim 1, **characterized in that** the portion of the plug (20") that comprises the fastening element (21, 35) is bent at right angles in relation to the central longitudinal axis (2).

## Revendications

1. Ensemble constitué d'un cylindre et d'une tige de piston et rempli de fluide, notamment amortisseur pneumatique, ayant les particularités suivantes :
- un boîtier sensiblement cylindrique (1', 1") présentant un axe longitudinal médian (2) et comportant une première extrémité obturée (5) et une seconde extrémité (4) ainsi qu'une paroi intérieure (7),
- une tige de piston (3) disposée partiellement dans le boîtier (1', 1") et partiellement en dehors du boîtier (1', 1") en étant coaxiale avec l'axe longitudinal médian (2),
- un piston (6) installé sur la tige de piston (3) et associé à la paroi intérieure (7),
- un guide disposé sur la seconde extrémité (4) du boîtier (1', 1") et servant à guider la tige de piston (3) dans la direction de l'axe longitudinal médian (2),
- une garniture d'étanchéité extérieure (12) disposée dans la zone du guide et s'appliquant hermétiquement contre la paroi intérieure (7),
- une garniture d'étanchéité extérieure (13) disposée dans la zone du guide et s'appliquant hermétiquement contre la tige de piston (3), et
- un bouchon obturateur (20', 20") disposé dans la zone de la première extrémité (5), relié au boîtier (1', 1") par crabotage, muni d'une garniture d'étanchéité annulaire (24) qui s'applique contre la paroi intérieure (7), et comportant un élément de fixation (21, 35),
caractérisé en ce que
le bouchon obturateur (20', 20") est muni d'une butée (25) servant à l'appui contre la première extrémité (5) du boîtier (1), en ce que le bouchon obturateur (20', 20") comporte, à son extrémité frontale (31) située dans le boîtier (1', 1"), un creux annulaire (32) destiné à recevoir une garniture d'étanchéité annulaire (24), ladite garniture d'étanchéité annulaire (24) prenant appui contre une surface d'appui (33) faisant saillie à partir de la paroi intérieure (7) du boîtier (1', 1") en direction radiale par rapport à l'axe longitudinal médian (2), et en ce que le bouchon obturateur (20', 20") est fixé, par rapport au boîtier (1', 1"), au moyen d'une moulure (26) s'engageant dans une rainure annulaire (23', 23") réalisée à sa périphérie.

2. Ensemble constitué d'un cylindre et d'une tige de piston selon la revendication 1, caractérisé en ce que la zone du bouchon obturateur (20") comprenant l'élément de fixation (21, 35) est coudée par rapport à l'axe longitudinal médian (2).
